# FASCICULE DE BREVET EUROPEEN

(11) **EP 1 607 673 B1**
(45) Date de publication et mention de la délivrance du brevet: **02.04.2008**
(21) Numéro de dépôt: 05291084.1
(22) Date de dépôt: 19.05.2005
(51) Int. Cl.: F16L 39/00

(54) **Procédé de fabrication d'un élément de conduit multi parois de section circulaire pour appareil de chauffage**
Herstellungsverfahren einer mehrwandigen Rohrleitung mit kreisförmigem Querschnitt für Heizgeräte
Method of manufacturing an element of a multiple walled pipe of circular cross section for heating device

(30) Priorité: 17.06.2004 FR 0406606
(43) Date de publication de la demande: 21.12.2005
(73) Titulaire: Participation Gestion Développement Industriel - P.G.D.I.-S.A., 35760 Saint-Grégoire (FR)
(72) Inventeur: Joncoux, Jacques-Olivier, 35700 Rennes (FR)
(74) Mandataire: Maillet, Alain

(56) Documents cités:
- EP-A- 0 553 936
- EP-A- 1 116 917
- EP-A- 1 428 590
- US-A- 2 693 026
- US-A- 4 607 665

## Description

La présente invention concerne un procédé de fabrication d'un élément de conduit multi parois de section circulaire apte à évacuer les gaz de combustion générés par un appareil de chauffage. Le document EP-A-1428590 décrit un procédé de fabrication d'un tel élément de conduit.

Un appareil de chauffage utilise pour son fonctionnement des combustibles de différentes natures. Ces combustibles sont soit liquides, soit gazeux, soit solides. La nature du combustible utilisé par l'appareil de chauffage ainsi que le type d'appareil de chauffage utilisé influencent le choix du type de conduit utilisé.

Différents types de conduit sont donc nécessaires dans cette industrie afin de répondre à différentes applications. Pour chaque type de conduit, des éléments de conduit, formés d'au moins deux tuyaux montés, les uns dans les autres, répondant aux contraintes techniques imposées par l'application visée sont fabriqués. Les types de tuyaux à fabriquer étant en nombre important, le nombre de tuyaux spécifiques à chaque type constituent un stock important de produits. Ce stockage pose des problèmes d'encombrement et coûte cher. Pour l'éviter, la solution actuellement choisie est la fabrication en flux tendu qui consiste à ne fabriquer que les produits commandés et permet ainsi de limiter le stock.

Le but de l'invention est donc d'apporter une solution aux problèmes de stockage tout en gardant la possibilité de fabriquer tous les types de conduits en permanence.

A cet effet, la présente invention concerne un procédé de fabrication d'un élément de conduit, notamment pour appareil de chauffage à combustion, ledit élément de conduit comprenant au moins un tuyau extérieur pourvu d'une extrémité mâle et d'une extrémité femelle et au moins un tuyau intérieur pourvu d'une extrémité mâle et d'une extrémité femelle. Le procédé selon l'invention se caractérise en ce qu'il consiste, d'une part, à positionner le tuyau intérieur dans le tuyau extérieur, l'extrémité mâle du tuyau extérieur se trouvant, selon l'utilisation prévue de l'élément de conduit, soit dans une première position à proximité de l'extrémité mâle du tuyau intérieur, soit dans une seconde position à proximité de l'extrémité femelle du tuyau intérieur et, d'autre part, à solidariser les tuyaux extérieur et intérieur ainsi positionnés.

Selon un premier mode de mise en oeuvre avantageux, le procédé consiste à solidariser le tuyau intérieur au tuyau extérieur dans une zone plan unique, ladite zone étant orthogonale à l'extrémité femelle dudit tuyau intérieur.

Selon un second mode de mise en oeuvre avantageux, l'extrémité mâle comme l'extrémité femelle du tuyau extérieur comportent chacune une gorge circulaire, la solidarisation desdits tuyaux intérieur et extérieur consistant à fixer une première extrémité d'au moins une entretoise sur ledit tuyau intérieur, à placer une seconde extrémité libre de ladite ou de chaque entretoise, selon la position adoptée par le tuyau extérieur, en face de l'une ou de l'autre des gorges circulaires et à procéder à l'expansion du tuyau intérieur de manière à amener l'extrémité libre de ladite ou de chaque entretoise à se loger dans la gorge circulaire correspondante.

Selon un troisième mode de mise en oeuvre avantageux, le tuyau extérieur se terminant à chaque extrémité par un bord libre et la distance entre le bord libre de l'extrémité mâle du tuyau extérieur et la gorge circulaire de cette même extrémité étant égale à la distance entre le bord libre de l'extrémité femelle du tuyau extérieur et la gorge circulaire de cette même extrémité, ledit procédé consiste alors à positionner le tuyau extérieur autour du tuyau intérieur de manière à ce que les axes transversaux médians du tuyau extérieur et du tuyau intérieur soient confondus, les gorges circulaires du tuyau extérieur étant alors symétriques par rapport à ces axes.

Selon un quatrième mode de mise en oeuvre avantageux, le procédé consiste en outre à assembler un premier tuyau extérieur d'extrémité mâle avec un second tuyau extérieur d'extrémité femelle, lesdites extrémités mâle et femelle étant emboîtées l'une dans l'autre jusqu'à amener l'extrémité femelle du second tuyau extérieur en butée contre la gorge circulaire dont est pourvue l'extrémité mâle du premier tuyau.

Selon un cinquième mode de mise en oeuvre avantageux, le procédé consiste en outre à solidariser l'assemblage du tuyau extérieur d'extrémité mâle avec le tuyau extérieur d'extrémité femelle à l'aide d'un collier de jonction.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. la représente une vue en demi-coupe longitudinale de l'assemblage d'éléments de conduit obtenus par un premier mode de mise en oeuvre de l'invention ;
la Fig. 1b représente une vue en demi-coupe longitudinale d'un élément de conduit obtenu par un premier mode de mise en oeuvre de l'invention ;
la Fig. 2a représente une vue en demi-coupe longitudinale de l'assemblage d'éléments de conduit obtenus par un second mode de mise en oeuvre de l'invention ; et
la Fig. 2b représente une vue en demi-coupe longitudinale d'un élément de conduit obtenu par un second mode de mise en oeuvre de l'invention.

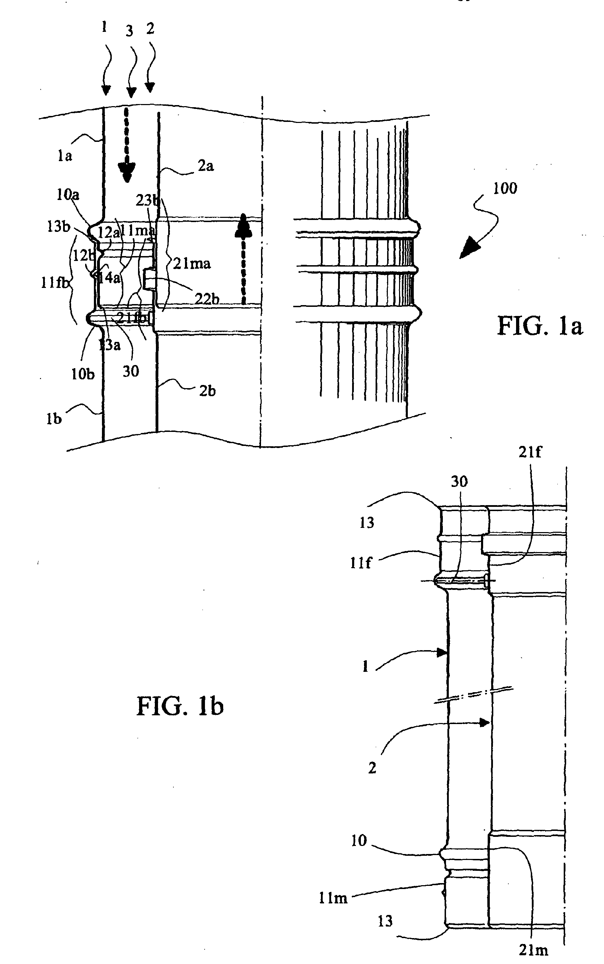

La présente invention concerne un procédé de fabrication d'un élément de conduit pour appareil de chauffage. Cet élément de conduit est représenté aux Figs. 1a à 2b. Un tel élément de conduit comprend un tuyau extérieur 1, un tuyau intérieur 2 apte à véhiculer les fumées à évacuer et un espace annulaire 3 compris entre ce tuyau intérieur 2 et un tuyau extérieur 1 destiné selon l'application, soit à la circulation de l'air dans le sens des fumées, soit à la circulation de l'air dans le sens inverse des fumées, soit à l'isolation thermique de l'élément de conduit par l'air ou par un autre isolant approprié. Un tel élément de conduit est constitué de plusieurs tuyaux tels que des tuyaux en coudes, en tés ou simplement droits prévus pour s'emboîter entre eux.

Un élément de conduit 100 selon l'invention comporte un tuyau extérieur 1 de forme générale cylindrique circulaire et un tuyau intérieur 2 de forme générale cylindrique circulaire. Le tuyau extérieur 1 comporte une extrémité mâle 11m et une extrémité femelle 11f. De même, le tuyau intérieur 2 comporte une extrémité mâle 21m et une extrémité femelle 21f. L'extrémité mâle 11m du tuyau extérieur 1 est prévue pour s'emboîter dans une extrémité femelle 11f d'un autre tuyau extérieur 1 et l'extrémité mâle 21m du tuyau intérieur 2 est prévue pour s'emboîter dans une extrémité femelle 21f d'un autre tuyau intérieur 2 et inversement. Un exemple d'emboîtement des extrémités est représenté aux Figs. 1a et 1b. Sur ces Figs., l'extrémité mâle 11ma d'un tuyau extérieur 1a est emboîtée dans l'extrémité 11fb d'un tuyau extérieur 1b et l'extrémité mâle 21ma d'un tuyau intérieur 2a est emboîtée dans l'extrémité femelle 21fb d'un tuyau intérieur 2b. Cet assemblage peut être avantageusement maintenu mécaniquement par un collier de jonction (non représenté).

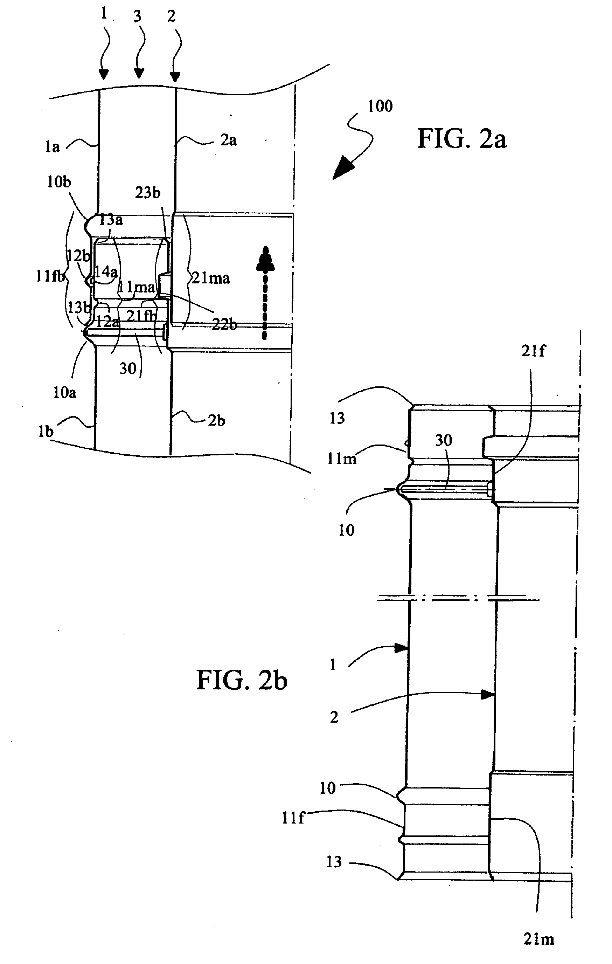

La structure des extrémités mâle 11m, 21m et femelle 11f, 21f des tuyaux extérieur 1 et intérieur 2 va être décrite en rapport avec les Figs. 1a et 2a. Sur ces figs., l'extrémité mâle 11m est l'extrémité 11ma du tuyau extérieur la et l'extrémité femelle 11f est l'extrémité 11fb du tuyau extérieur 1b. De même, l'extrémité mâle 21m est l'extrémité 2 1 ma du tuyau intérieur 2a et l'extrémité femelle 21f est l'extrémité 21fb du tuyau intérieur 2b.

En référence aux Fig. 1a et 2b, l'extrémité 11fb du tuyau extérieur 1b comporte une proéminence de préférence constituée par une gorge circulaire 10b qui se prolonge à l'extrémité du tuyau extérieur 1b par une paroi circulaire droite et se termine par un bord évasé 13b vers l'extérieur du tuyau 1b. Le tuyau extérieur 1a comporte également à son extrémité 11ma une proéminence de préférence constituée par une gorge circulaire 10a prolongée par une partie circulaire droite pouvant comporter une gorge circulaire creuse 12a destinée à accueillir un joint et terminée par un retreint 13a. La gorge 10a est notamment prévue pour former une butée pour le bord évasé 13b et ainsi assurer à l'élément de conduit 100 un maintien vertical. Comme cela est représenté sur les Figs. 1a et 2a, le tuyau extérieur 1a peut comporter des bossages 14a répartis à la périphérie de l'extrémité 11ma du tuyau 1a d'extrémité mâle prévus pour s'encliqueter dans une gorge 12b prévue sur l'extrémité 11fb du tuyau 1b. Ces bossages 14a et cette gorge 12b viennent renforcer le maintien vertical des tuyaux et permettent également un bon positionnement des tuyaux 1a et 1b entre eux.

Le tuyau intérieur 2a comporte une extrémité mâle 21 ma de diamètre légèrement supérieur au diamètre du tuyau 2a. Le tuyau intérieur 2b comporte une extrémité femelle 21fb de diamètre légèrement supérieur à celui de l'extrémité mâle du tuyau 2b (non représentée), laquelle extrémité mâle du tuyau 2b possède un diamètre équivalent au diamètre de l'extrémité mâle 21ma du tuyau 2a. Cette extrémité 21fb est constituée par une paroi circulaire droite pourvue d'une gorge trapézoïdale 22b et terminée par un bord évasé 23b.

Le procédé selon l'invention est un procédé de fabrication d'un élément de conduit comportant les éléments décrits précédemment. Les Figs. 1b et 2b représentent chacune un résultat obtenu par un mode de mise en oeuvre de l'invention. Ainsi, en rapport avec la Fig. 1b, le procédé consiste, à partir des tuyaux précédemment décrits, d'une part, à positionner un tuyau intérieur 2 dans un tuyau extérieur 1 de sorte que l'extrémité mâle 11m du tuyau extérieur 1 se trouve dans une première position, position dans laquelle l'extrémité mâle 11m se trouve à proximité de l'extrémité mâle 21m du tuyau intérieur 2 et, d'autre part, à solidariser les tuyaux 1 et 2 ensemble de manière à former un élément de conduit. L'extrémité mâle 11m du tuyau extérieur 1 entoure alors l'extrémité mâle 21m du tuyau intérieur 2. En effet, le procédé de fabrication selon l'invention prévoit une inversion du tuyau extérieur par rapport au tuyau intérieur, lequel tuyau intérieur est de préférence toujours orienté de manière à tenir une même position. Ce positionnement du tuyau extérieur par rapport au tuyau intérieur est particulièrement intéressant pour des éléments de conduit du type à double paroi à lame d'air circulant dans le sens inverse des fumées, notamment pour éviter les problèmes d'étanchéité entre les parois de l'élément de conduit et entre l'élément de conduit et l'extérieur.

Le procédé selon l'invention prévoit de permettre le positionnement tête bêche du tuyau extérieur et du tuyau intérieur. Ainsi que représenté à la Fig. 2b, le procédé consiste, à partir des tuyaux 1 et 2 précédemment décrits, d'une part, à positionner le tuyau intérieur 2 dans le tuyau extérieur 1 de sorte que l'extrémité mâle 11m du tuyau extérieur 1 se trouve dans une seconde position, position dans laquelle l'extrémité mâle 11m du tuyau 1 se trouve à proximité de l'extrémité femelle 21f du tuyau intérieur 2 et, d'autre part, à solidariser l'ensemble ainsi formé. L'extrémité mâle 11m du tuyau extérieur 1 entoure alors l'extrémité femelle 21f du tuyau intérieur 2. En effet, le procédé de fabrication selon l'invention prévoit une inversion du tuyau extérieur par rapport au tuyau intérieur, lequel tuyau intérieur est de préférence toujours orienté de manière à tenir une même position. Ce positionnement des tuyaux entre eux est particulièrement intéressant pour des éléments de conduit du type à double paroi isolé, notamment pour faciliter l'écoulement des ruissellements à l'extérieur de l'élément de conduit.

Le tuyau intérieur 2 est de préférence solidarisé avec le tuyau extérieur 1 de la manière suivante. Des entretoises 30 sont fixées, par exemple par soudage ou tout autre moyen assurant une fonction de fixation, chacune par une extrémité sur la paroi extérieure de l'extrémité femelle 21f du tuyau intérieur 2 de manière à s'étendre radialement vers l'extérieur. Elles sont réparties régulièrement sur la périphérie de l'extrémité femelle du tuyau intérieur 2 dans un plan perpendiculaire à l'axe du tuyau intérieur 2 situé au niveau d'une partie supérieure de l'extrémité femelle 21f de ce tuyau intérieur 2. Les entretoises 30 sont toutes de même longueur, de sorte que les extrémités libres de ces entretoises 30 se trouvent sur un même cercle situé, soit dans le plan de la gorge 10b du tuyau extérieur 1b sur la Fig. 1a, soit dans le plan de la gorge 10a du tuyau extérieur 1a sur la Fig. 2a. Une fois les entretoises positionnées, le tuyau intérieur est expansé et les entretoises viennent se loger dans la gorge qui se trouve en correspondance. Ces entretoises 30 assurent donc une fonction de blocage des tuyaux l'un par rapport à l'autre dans un plan horizontal, mais également dans un plan vertical. Le tuyau intérieur est donc solidarisé au tuyau extérieur dans une zone plan unique orthogonale à l'extrémité femelle du tuyau intérieur.

Lorsque la solidarisation des tuyaux est effectuée à l'aide d'entretoises, du fait que le tuyau extérieur comporte à chacune de ses extrémités 11m, 11f une gorge circulaire 10, les entretoises 30 peuvent donc se loger dans une gorge circulaire 10 quelle que soit la position du tuyau extérieur 1 par rapport au tuyau intérieur 2.

En outre, chaque tuyau possédant à ses extrémités un bord libre, la distance entre une première gorge 10 à un bord libre 13 du tuyau extérieur 1 étant égale à la distance entre une seconde gorge 10 à un second bord libre 13 dudit tuyau extérieur 1, par exemple la distance entre le bord libre 13 de l'extrémité mâle 11m du tuyau extérieur 1 et la gorge circulaire 10 de cette même extrémité 11m étant égale à la distance entre le bord libre 13 de l'extrémité femelle 11f du tuyau extérieur 1 et la gorge circulaire 10 de cette même extrémité 11f, le tuyau extérieur 1 est positionné autour du tuyau intérieur 2 de manière à ce que l'axe transversal médian du tuyau extérieur soit confondu avec l'axe transversal médian du tuyau intérieur 2, les gorges circulaires 10 du tuyau extérieur 1 étant alors symétriques par rapport à ces axes. En outre, le tuyau extérieur 1 est positionné de manière identique par rapport au tuyau intérieur 2 que les tuyaux soit dans la première position ou dans la seconde position.

L'avantage principal procuré par le procédé est de permettre la fabrication d'éléments de conduits de types différents à l'aide d'un seul type de tuyau extérieur et seul type de tuyau intérieur. En outre, l'invention permet de réduire considérablement le stock de tuyaux utiles à la fabrication de conduits de tous types, ce qui permet de diminuer les coûts de production de ces conduits.

## Revendications

1. Procédé de fabrication d'un élément de conduit de section circulaire, notamment pour appareil de chauffage à combustion, ledit élément de conduit comprenant au moins un tuyau extérieur (1) pourvu d'une extrémité mâle 11m et d'une extrémité femelle 11f et au moins un tuyau intérieur (2) pourvu d'une extrémité mâle 21m et d'une extrémité femelle 21f, **caractérisé en ce qu**'il consiste à choisir l'utilisation de l'élément de conduit, à positionner le tuyau intérieur dans le tuyau extérieur de manière que, selon l'utilisation choisie de l'élément de conduit, l'extrémité mâle 11m du tuyau extérieur se trouve soit dans une première position à proximité de l'extrémité mâle 21m du tuyau intérieur, soit dans une seconde position à proximité de l'extrémité femelle 21f du tuyau intérieur et à solidariser l'un à l'autre les tuyaux extérieur et intérieur ainsi positionnés.

2. Procédé selon la revendication 1, **caractérisé en ce qu**'il consiste à solidariser le tuyau intérieur au tuyau extérieur dans une zone plan unique, ladite zone étant orthogonale à l'extrémité femelle dudit tuyau intérieur.

3. Procédé selon la revendication 1 ou 2, **caractérisé en ce que** l'extrémité mâle 11m comme l'extrémité femelle 11f du tuyau extérieur comportent chacune une gorge circulaire 10, la solidarisation desdits tuyaux intérieur et extérieur consistant à fixer une première extrémité d'au moins une entretoise 30 sur ledit tuyau intérieur, à placer une seconde extrémité libre de ladite ou de chaque entretoise 30, selon la position adoptée par le tuyau extérieur, en face de l'une ou de l'autre des gorges circulaires 10 et à procéder à l'expansion du tuyau intérieur 2 de manière à amener l'extrémité libre de ladite ou de chaque entretoise à se loger dans la gorge circulaire correspondante.

4. Procédé selon la revendication 3, **caractérisé en ce que** le tuyau extérieur se terminant à chaque extrémité par un bord libre 13 et la distance entre le bord libre de l'extrémité mâle 11m du tuyau extérieur et la gorge circulaire de cette même extrémité étant égale à la distance entre le bord libre de l'extrémité femelle 11f du tuyau extérieur et la gorge circulaire de cette même extrémité, ledit procédé consiste alors à positionner le tuyau extérieur autour du tuyau intérieur de manière à ce que les axes transversaux médians du tuyau extérieur et du tuyau intérieur soient confondus, les gorges circulaires du tuyau extérieur étant alors symétriques par rapport à ces axes.

5. Procédé selon la revendication 3 ou 4, **caractérisé en ce qu**'il consiste en outre à assembler un premier tuyau extérieur d'extrémité mâle 11m avec un second tuyau extérieur d'extrémité femelle 11f, lesdites extrémités mâle et femelle étant emboîtées l'une dans l'autre jusqu'à amener l'extrémité femelle du second tuyau extérieur en butée contre la gorge circulaire 10 dont est pourvue l'extrémité mâle du premier tuyau.

6. Procédé selon la revendication 5, **caractérisé en ce qu**'il consiste en outre à solidariser l'assemblage du tuyau extérieur d'extrémité mâle avec le tuyau extérieur d'extrémité femelle à l'aide d'un collier de jonction.

7. Elément de conduit de section circulaire, notamment pour appareil de chauffage à combustion, comprenant au moins un tuyau extérieur 1 pourvu d'une extrémité mâle 11m et d'une extrémité femelle 11f et au moins un tuyau intérieur 2 pourvu d'une extrémité mâle 21m et d'une extrémité femelle 21f , l'extrémité mâle comme l'extrémité femelle du tuyau extérieur comportant chacune une gorge circulaire 10 et un bord libre 13, **caractérisé en ce que** la distance entre le bord libre 13 de l'extrémité mâle 11m du tuyau extérieur et la gorge circulaire de cette même extrémité est égale à la distance entre le bord libre 13 de l'extrémité femelle 11f du tuyau extérieur et la gorge circulaire 10 de cette même extrémité, et **en ce que** les axes transversaux médians du tuyau extérieur et du tuyau intérieur sont confondus, de manière que, selon l'utilisation envisagée du conduit, l'extrémité mâle 11m du tuyau extérieur se trouve soit dans une première position à proximité de l'extrémité mâle 21m du tuyau intérieur, soit dans une seconde position à proximité de l'extrémité femelle 21f du tuyau intérieur 2, les gorges circulaires (10) du tuyau extérieur (1) étant alors symétriques par rapport à ces axes.

8. Elément de conduit selon la revendication 7, **caractérisé en ce qu**'il comprend un moyen pour solidariser le tuyau intérieur au tuyau extérieur dans une zone plan unique, ladite zone étant orthogonale à l'extrémité femelle dudit tuyau intérieur.

9. Elément de conduit selon la revendication 7 ou 8, **caractérisé en ce que** la gorge circulaire 10 de chacune des extrémités mâle 11m et femelle 11f du tuyau extérieur est apte à recevoir une extrémité d'une entretoise 30, une autre extrémité de cette entretoise étant fixée à l'extrémité femelle du conduit intérieur.

10. Elément de conduit selon l'une des revendications 9 à 11, **caractérisé en ce que** la gorge circulaire 10 dont est pourvue l'extrémité mâle du premier tuyau forme une butée pour le bord libre de l'extrémité femelle 11f du tuyau extérieur lorsque deux tuyaux extérieurs sont emboîtés l'un dans l'autre.

11. Elément de conduit selon la revendication 5, **caractérisé en ce qu**'il comporte en outre un collier de jonction apte à solidariser l'assemblage du tuyau extérieur d'extrémité mâle avec le tuyau extérieur d'extrémité femelle.

## Claims

1. Method of manufacturing a pipe element of circular cross-section particularly for equipment for heating by combustion, the said pipe element comprising at least one outer tube (1) provided with a male end 11m and a female end 11f and at least one inner tube (2) provided with a male end 21m and a female end 21f, **characterised in that** it comprises selecting the use of the pipe element, positioning the inner tube in the outer tube in such a way that, depending on the use selected for the pipe element, the male end 11m of the outer tube is situated either in a first position close to the male end 21m of the inner tube, or in a second position close to the female end 21 f of the inner tube, and securing together the outer and inner tubes which have been positioned in this way.

2. Method according to claim 1, **characterised in that** it comprises securing the inner tube to the outer tube in a single, plane zone, the said zone being orthogonal to the female end of the said inner tube.

3. Method according to claim 1 or 2, **characterised in that** the male end 11m and the female 11 f end of the outer tube each comprise a circular groove 10, the securing together of the said inner and outer tubes comprising fixing a first end of at least one tie 30 to the said inner tube, placing a second, free end of the said or each tie 30 opposite one or other of the circular grooves 10 depending on the position occupied by the outer tube, and proceeding to expand the inner tube 2 in such a way as to cause the free end of the said or each tie to seat itself in the corresponding circular groove.

4. Method according to claim 3, **characterised in that**, the outer tube terminating at each end in a free edge 13 and the distance between the free edge of the male end 11m of the outer tube and the circular groove in this same end being equal to the distance between the free edge of the female end 11f of the outer tube and the circular groove in this same end, the said method then comprises positioning the outer tube around the inner tube in such a way that the transverse centrelines of the outer tube and the inner tube coincide, the circular grooves in the outer tube then being symmetrical about the said centrelines.

5. Method according to claim 3 or 4, **characterised in that** it also comprises assembling a first outer tube having a male end 11m and a second outer tube having a female end 11 f, the said male and female ends being inserted one into the other until the female end of the second outer tube is brought into abutment against the circular groove 10 with which the male end of the first tube is provided.

6. Method according to claim 5, **characterised in that** it also comprises securing together the assembly formed by the outer tube having a male end and the outer tube having a female end with the help of a joining collar.

7. Pipe element of circular cross-section particularly for equipment for heating by combustion, comprising at least one outer tube 1 provided with a male end 11m and a female end 11f) and at least one inner tube 2 provided with a male end 21m and a female end 21f, the male end and the female end of the outer tube each comprising a circular groove 10 and a free edge 13, **characterised in that** the distance between the free edge 13 of the male end 11m of the outer tube and the circular groove in this same end is equal to the distance between the free edge 13 of the female end 11f of the outer tube and the circular groove 10 in this same end, and **in that** the transverse centrelines of the outer tube and the inner tube coincide, in such a way that, depending on the use envisaged for the pipe, the male end 11m of the outer tube is situated either in a first position close to the male end 21m of the inner tube, or in a second position close to the female end 21f of the inner tube 2, the circular grooves (10) in the outer tube (1) then being symmetrical about the said centrelines.

8. Pipe element according to claim 7, **characterised in that** it comprises a means of securing the inner tube to the outer tube in a single, plane zone, the said zone being orthogonal to the female end of the said inner tube.

9. Pipe element according to claim 7 or 8, **characterised in that** the circular groove 10 in each of the male 11m and female 11f ends of the outer tube is suitable for receiving an end of a tie 30, another end of the said tie being fixed to the female end of the outer pipe.

10. Pipe element according to one of claims 9 to 11, **characterised in that** the circular groove 10 with which the male end of the first tube is provided forms an abutment for the free edge of the female end 11f of the outer tube when two outer tubes are inserted one into the other.

11. Pipe element according to claim 5, **characterised in that** it also comprises a joining collar suitable for securing together the assembly formed by the outer tube having a male end and the outer tube having a female end.

## Patentansprüche

1. Herstellungsverfahren eines Rohrleitungselements mit kreisförmigem Querschnitt, insbesondere für ein Verbrennungsheizgerät, wobei das Rohrleitungselement mindestens eine Außenrohrleitung (1) aufweist, die mit einem Steckende (11m) und mit einem Buchsenende (11f) versehen ist, und mit mindestens einer Innenrohrleitung (2), die mit einem Steckende (21m) und mit einem Buchsenende (21f) versehen ist, **dadurch gekennzeichnet, dass** es darin besteht, den Gebrauch des Rohrleitungselements auszuwählen, die Innenrohrleitung in der Außenrohrleitung derart zu positionieren, dass, je nach ausgewähltem Gebrauch des Rohrleitungselements, das Steckende (11m) der Außenrohrleitung entweder in einer ersten Position in der Nähe des Steckendes (21m) der Innenrohrleitung liegt, oder in einer zweiten Position in der Nähe des Buchsenendes (21f) der Innenrohrleitung, und die Außenrohrleitung und die Innenrohrleitung, die so positioniert sind, fest miteinander zu verbinden.

2. Verfahren nach Anspruch 1, **dadurch gekennzeichnet, dass** es darin besteht, die Innenrohrleitung mit der Außenrohrleitung in einem einzigen ebenen Bereich fest zu verbinden, wobei der Bereich zu dem Buchsenende der Innenrohrleitung im rechten Winkel steht.

3. Verfahren nach Anspruch 1 oder 2, **dadurch gekennzeichnet, dass** das Steckende (11m) ebenso wie das Buchsenende (11f) der Außenrohrleitung jeweils eine kreisförmige Hohlkehle (10) aufweisen, wobei das feste Verbinden der Innenrohrleitung mit der Außenrohrleitung darin besteht, ein erstes Ende mindestens eines Abstandshalters (30) auf der Innenrohrleitung zu befestigen, das zweite freie Ende der oder jedes Abstandshalters (30) gemäß der Position, die von der Außenrohrleitung eingenommen wird, gegenüber der einen oder der anderen kreisförmigen Hohlkehle (10) zu platzieren und das Ausdehnen der Innenrohrleitung (2) derart vorzunehmen, dass das freie Ende des oder jedes Abstandshalters zum Einfügen in die entsprechende kreisförmige Hohlkehle gebracht wird.

4. Verfahren nach Anspruch 3, **dadurch gekennzeichnet, dass** die Außenrohrleitung an jedem Ende mit einem freien Rand (13) endet und dass die Entfernung zwischen dem freien Rand des Steckendes (11m) der Außenrohrleitung und der kreisförmigen Hohlkehle eben dieses Endes gleich der Entfernung zwischen dem freien Rand des Buchsenendes (11f) der Außenrohrleitung und der kreisförmigen Hohlkehle dieses Endes ist, wobei das Verfahren darin besteht, die Außenrohrleitung um die Innenrohrleitung derart zu positionieren, dass die mittleren Querachsen der Außenrohrleitung und der Innenrohrleitung zusammenfallen, wobei die kreisförmigen Hohlkehlen in Bezug auf diese Achsen symmetrisch sind.

5. Verfahren nach Anspruch 3 oder 4, **dadurch gekennzeichnet, dass** es darin besteht, ferner eine erste Außenrohrleitung mit Steckende (11m) mit einer zweiten Außenrohrleitung mit Buchsenende (11f) zusammenzufügen, so dass das Steckende und das Buchsenende ineinander einrasten, bis das Buchsenende der zweiten Außenrohrleitung zum Anschlagen gegen die kreisförmige Hohlkehle (10), mit der das Steckende der ersten Rohrleitung versehen ist, kommt.

6. Verfahren nach Anspruch 5, **dadurch gekennzeichnet, dass** es darin besteht, ferner das Zusammenfügen der Außenrohrleitung mit Steckende mit der Außenrohrleitung mit Buchsenende fest mit Hilfe einer Verbindungsschelle zu verbinden.

7. Rohrleitungselement mit kreisförmigem Querschnitt, insbesondere für Verbrennungsheizgerät, das mindestens eine Außenrohrleitung (1) aufweist, die mit einem Steckende (11m) und einem Buchsenende (11f) versehen ist, und mindestens eine Innenrohrleitung (2), die mit einem Steckende (21m) und einem Buchsenende (21f) versehen ist, wobei das Steckende und das Buchsenende der Außenrohrleitung jeweils eine kreisförmige Hohlkehle (10) und einen freien Rand (13) aufweisen, **dadurch gekennzeichnet, dass** die Entfernung zwischen dem freien Rand (13) des Steckendes (11m) der Außenrohrleitung und der kreisförmigen Hohlkehle dieses Endes gleich der Entfernung zwischen dem freien Rand (13) des Buchsenendes (11f) der Außenrohrleitung und der kreisförmigen Hohlkehle (10) dieses gleichen Endes ist, und dass die mittleren Querachsen der Außenrohrleitung und der Innenrohrleitung derart zusammenfallen, dass, je nach dem in Betracht gezogenen Gebrauch der Rohrleitung, das Steckende (11m) der Außenrohrleitung entweder in einer ersten Position in der Nähe des Steckendes (21m) der Innenrohrleitung ist oder in einer zweiten Position in der Nähe des Buchsenendes (21f) der Innenrohrleitung (2), wobei die kreisförmigen Hohlkehlen (10) der Außenrohrleitung (1) in Bezug auf diese Achsen symmetrisch sind.

8. Rohrleitungselement nach Anspruch 7, **dadurch gekennzeichnet, dass** es ein Mittel aufweist, um die Innenrohrleitung fest mit der Außenrohrleitung in einem einzigen ebenen Bereich fest zu verbinden, wobei der Bereich zu dem Buchsenende der Innenrohrleitung senkrecht steht.

9. Rohrleitungselement nach Anspruch 7 oder 8, **dadurch gekennzeichnet, dass** die kreisförmige Hohlkehle (10) jedes Steckendes (11m) und Buchsenendes (11f) der Außenrohrleitung ein Ende eines Abstandshalters (30) aufnehmen kann, wobei ein anderes Ende dieses Abstandshalters an dem Buchsenende der Innenrohrleitung befestigt wird.

10. Rohrleitungselement nach einem der Ansprüche 9 bis 11, **dadurch gekennzeichnet, dass** die kreisförmige Hohlkehle (10), mit der das Steckende der ersten Rohrleitung versehen ist, für den freien Rand des Buchsenendes (11f) der Außenrohrleitung einen Anschlag bildet, wenn zwei Außenrohrleitungen ineinander eingerastet werden.

11. Rohrleitungselement nach Anspruch 5, **dadurch gekennzeichnet, dass** es ferner eine Verbindungsschelle aufweist, die das Gefüge der Außenrohrleitung mit Steckende mit der Außenrohrleitung mit Buchsenende fest verbinden kann.
